# FASCICULE DE BREVET EUROPEEN

(11) **EP 3 059 483 B1**
(45) Date de publication et mention de la délivrance du brevet: **13.06.2018**
(21) Numéro de dépôt: 16155386.2
(22) Date de dépôt: 12.02.2016
(51) Int. Cl.: F16L 29/04

(54) **CONNECTEUR POUR TUYAUX DE RACCORDEMENT DE SYSTÈME DE CLIMATISATION ET APPAREIL DE CLIMATISATION ASSOCIÉ**
ANSCHLUSSSTÜCK FÜR VERBINDUNGSROHRE EINES KLIMAANLAGENSYSTEMS, UND ENTSPRECHENDES KLIMAANLAGENGERÄT
CONNECTOR FOR CONNECTING PIPES OF AN AIR-CONDITIONING SYSTEM AND ASSOCIATED AIR-CONDITIONING DEVICE

(30) Priorité: 19.02.2015 FR 1551438
(43) Date de publication de la demande: 24.08.2016
(73) Titulaire: Star Light, 06000 Nice (FR)
(72) Inventeur: MAZIGH, Patrice, 06200 NICE (FR)
(74) Mandataire: Decobert, Jean-Pascal

(56) Documents cités:
- FR-A- 1 035 698
- FR-A1- 2 994 592

## Description

### DOMAINE DE L'INVENTION

L'invention concerne un connecteur pour relier les tuyaux d'un système de climatisation, ces tuyaux pouvant relier diverses unités de climatisation dudit système.

L'invention trouvera son utilisation pour l'interconnexion hermétique sous pression lors du montage d'appareils de climatisation notamment pour des appareils de climatisation de type bi-blocs muraux.

### ETAT DE LA TECHNIQUE

Un tel système de climatisation comprend une unité intérieure et au moins une unité extérieure reliées entre elles par des tuyaux de raccordement.

Une méthode conventionnelle pour installer un climatiseur, de sorte à expulser l'air de l'unité intérieure et l'air dans les tuyaux de raccordement après l'installation, consiste à charger en gaz réfrigérant la partie principale de l'unité extérieure jusqu'à un volume en excès par rapport au volume spécifié requis pour l'utilisation de la fonction air conditionné du système. Cet excès de gaz réfrigérant permet de purger l'air présent dans le reste du circuit. On utilise à cet effet une valve deux voies au niveau de l'unité extérieure de sorte que, une fois l'installation terminée, la circulation du gaz réfrigérant expulse l'air dans l'atmosphère. Ce procédé traditionnel est particulièrement dommageable pour l'environnement puisqu'il induit un dégazage de gaz réfrigérant dans l'atmosphère particulièrement nuisible, notamment par la destruction de la couche d'ozone.

On a donc cherché à proposer des dispositifs évitant de telles fuites de gaz réfrigérant dans l'atmosphère. En ce sens, une fois la connexion entre les unités intérieure et extérieure faite de façon traditionnelle par une liaison en cuivre qui se raccorde à l'unité intérieure et à l'unité extérieure par un écrou à serrer sur un filetage, il faut une intervention d'un frigoriste pour limiter les risques de dégazage dans l'atmosphère et éviter le tirage au vide de l'installation. Cette étape nécessite non seulement l'intervention d'un professionnel qualifié mais aussi l'emploi d'un matériel adéquat et souvent coûteux pour le pompage. En outre, les risques de dégazage ne sont en tout état de cause pas totalement supprimés.

On connaît du document FR 2994592 A1 un connecteur permettant de solidariser de manière fiable deux parties de connecteurs, au moyen d'un mécanisme assurant l'ouverture du circuit de gaz uniquement lorsque la connexion a abouti.

Cependant, ce connecteur ne garantit pas l'inviolabilité de la connexion fluidique au cours du temps, et, particulièrement, ne prévient pas les mauvaises manipulations des utilisateurs après montage.

### RESUME DE L'INVENTION

La présente invention concerne un connecteur de tuyau de circuit de climatisation comprenant une première partie et une deuxième partie destinées à coopérer de sorte que le connecteur opère un passage d'une position déconnectée à une position connectée, la première partie comprenant un premier corps longitudinal ménageant un passage traversant recevant une soupape mobile, ledit passage logeant un premier ressort destiné à maintenir la soupape en contact étanche avec le premier corps longitudinal lorsque le connecteur est en position déconnectée, le premier corps longitudinal comprenant une butée interne contre laquelle la soupape est destinée à être en contact par défaut sous l'action du premier ressort au moins lorsque le connecteur est en position déconnectée et la deuxième partie comprenant un deuxième corps longitudinal ménageant un passage traversant ainsi qu'un manchon mobile et un piston, le piston étant placé au moins partiellement dans le manchon placé au moins partiellement dans le deuxième corps longitudinal et le piston étant fixe relativement au deuxième corps longitudinal, un second ressort étant placé entre une bague de maintien et le manchon dans le deuxième corps longitudinal de sorte à maintenir un contact du manchon contre le premier corps longitudinal lorsque le connecteur est en position connectée, ledit connecteur comporte un dispositif anti-retour configuré pour retenir le piston dans la première partie après le passage de la position déconnectée à la position connectée, caractérisé en ce que le dispositif anti-retour comprend au moins une dent de rétention, fixe relativement au premier corps longitudinal et configurée pour s'appliquer sur une surface de butée portée par le piston

Grâce au dispositif de rétention, on supprime toute possibilité pour un utilisateur non averti de démontage de la liaison créée par le connecteur, si bien que le système est sécurisé.

L'invention concerne aussi un appareil de climatisation comportant une unité extérieure et au moins une unité intérieure, au moins l'une des unités extérieure et intérieure comprenant un circuit empli d'un fluide réfrigérant, les deux circuits étant reliés par au moins un connecteur.

Avantageusement, deux tuyaux de raccordement relient respectivement l'entrée du circuit extérieur de l'unité extérieure à la sortie du circuit intérieur de l'unité intérieure ou la sortie du circuit extérieur de l'unité extérieure à l'entrée du circuit intérieur de l'unité intérieure, un connecteur étant prévu à chaque extrémité de chaque tuyau.

Un procédé de montage est aussi présenté.

### BREVE INTRODUCTION DES FIGURES

D'autres buts et avantages de la présente invention apparaîtront au cours de la description qui suit d'un mode de réalisation préféré de l'invention, cependant non limitatif. Les dessins ci-joints sont ainsi donnés à titre d'exemples et ne sont pas limitatifs de l'invention. Ils représentent seulement un mode de réalisation de l'invention et permettront de la comprendre aisément.
La figure 1 est une vue de la première partie du connecteur.
La figure 3 est une vue en coupe BB de la première partie du connecteur selon la figure 1.

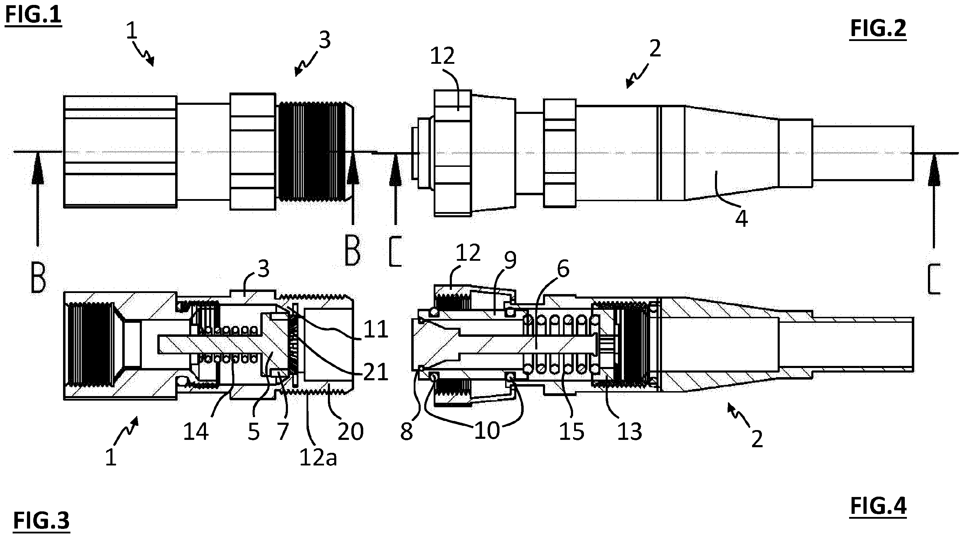

La figure 2 est une vue de la deuxième partie du connecteur.
La figure 4 est une vue en coupe CC de la deuxième partie du connecteur selon la figure 2.

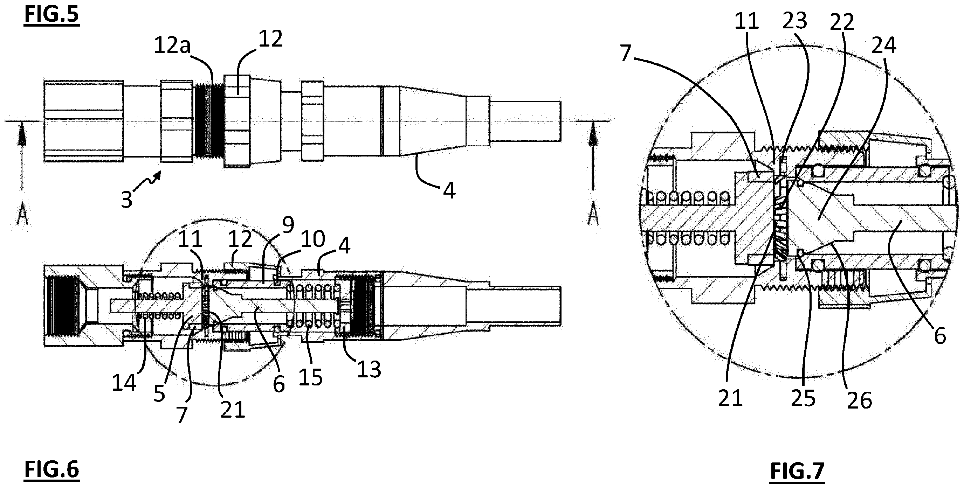

La figure 5 est une vue du connecteur connecté sans circulation du fluide.
La figure 6 est une vue en coupe du connecteur selon la figure 5.
La figure 7 est une vue de détail suivant le cercle D de la figure 6.

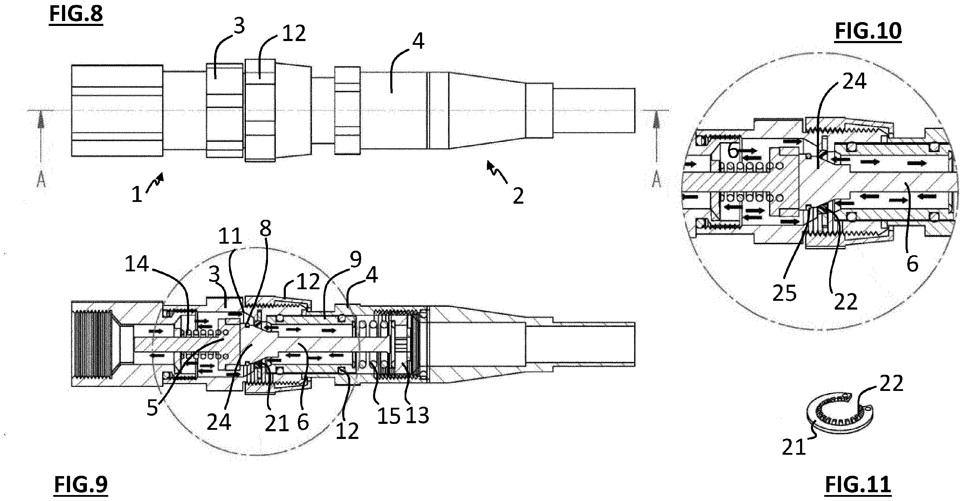

La figure 8 est une vue du connecteur avec la première partie et la deuxième partie connectées avec circulation du fluide.
La figure 9 est une vue en coupe AA du connecteur selon la figure 8.
La figure 10 est une vue de détail selon la figure 9.
La figure 11 donne un exemple de réalisation d'un élément du dispositif de rétention.

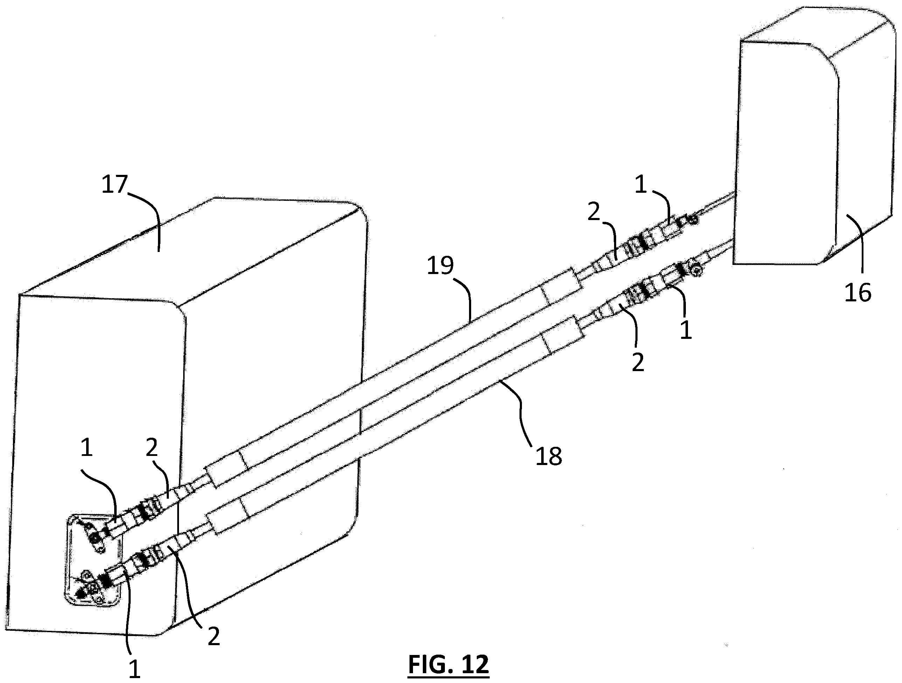

La figure 12 illustre un mode de réalisation d'un appareil de climatisation selon l'invention.

### DESCRIPTION DETAILLEE

Avant d'entrer dans le détail de modes de réalisation de l'invention, notamment au regard des figures, on indique ci-après différentes possibilités que l'invention peut éventuellement présenter individuellement ou selon toutes combinaisons :
- la au moins une dent 22 est déformable élastiquement de sorte à autoriser le passage de la dent 22 sur la surface de butée lors du passage de la position déconnectée à la position connectée ;
- la au moins une dent 22 est inclinée en direction d'une partie distale du premier corps longitudinal 3 ;
- la au moins une dent 22 est portée par un anneau 21 fixée dans le premier corps longitudinal ;
- l'anneau 21 est monté dans une gorge 23 ;
- Il comprend une pluralité de dents 22 suivant la circonférence de l'anneau 21 ;
- le piston 6 comporte une tête 24, la surface de butée étant portée par la tête 24 ;
- la surface de butée comporte une partie inclinée 26 ;
- la partie inclinée 26 comprend une portion conique et une pluralité de dents uniformément réparties autour de la portion conique ;
- la surface de butée comprend une bordure 25 étant située entre une extrémité distale de la tête 24 et la partie inclinée 26 ;
- l'extrémité distale 26 de la tête du piston 6 est configurée pour être en contact avec la soupape 5 lorsque le connecteur est en position connectée.

L'invention concerne un connecteur de raccordement pour les tuyaux de climatisation. On entend par tuyau, une canalisation ou un conduit qui peut être souple ou rigide et destinée à l'écoulement d'un fluide, par exemple un liquide ou un gaz. Ces tuyaux peuvent être des éléments de circulation du fluide en étant raccordés à des unités intérieure et extérieure formant un appareil de climatisation.

Le connecteur selon l'invention comprend une première partie 1 préférentiellement destinée à être reliée à une unité extérieure 16 d'un appareil de climatisation et une deuxième partie 2 pouvant être destinée à être reliée à une unité intérieure 17 d'un appareil de climatisation, mais ceci n'est pas obligatoire.

Une autre forme de réalisation d'un appareil de climatisation avec un autre positionnement des connecteurs sera détaillée ultérieurement en regard de la figure 12.

De manière générale, selon la présente invention, les connecteurs sont positionnés dans un appareil de climatisation.

La première partie 1 et la deuxième partie 2 sont destinées à coopérer de sorte à permettre le raccordement des tuyaux auxquels elles sont fixées.

Lorsque la première partie 1 et la deuxième partie 2 sont connectées, le connecteur est en position connectée. Inversement, lorsque la première partie 1 et la deuxième partie 2 sont déconnectées, le connecteur est en position déconnectée.

On entend par position déconnectée que la première partie 1 et la deuxième partie 2 du connecteur ne sont pas raccordées. Il n'y a pas alors de passage de fluide à travers le connecteur. A l'inverse, on entend par position connectée celle où la première partie 1 et la deuxième partie 2 du connecteur sont raccordées qu'il y ait ou non possibilité de passage du fluide.

La première partie 1 comprend un premier corps longitudinal 3 ménageant un passage traversant permettant l'écoulement du fluide. Le premier corps longitudinal 3 comprend dans le passage traversant une soupape mobile 5 fermée par défaut. La soupape 5 est munie d'au moins un moyen d'étanchéité 7 assurant l'étanchéité par défaut avec le premier corps longitudinal 3 au moins lorsque le connecteur est en position déconnectée.

Le premier corps longitudinal 3 comprend une butée interne 11 contre laquelle la soupape 5 est destinée à être en contact par défaut.

La soupape 5 est maintenue fermée par défaut au moyen d'un premier élément élastique tel qu'un ressort 14 disposé entre la soupape 5 et préférentiellement le premier corps longitudinal 3. Avantageusement, la butée interne 11 est formée dans le premier corps longitudinal 3 dans sa partie proximale 20, c'est-à-dire à l'extrémité destinée à être raccordée à la deuxième partie 2 du connecteur. De manière similaire, l'extrémité proximale de la deuxième partie 2 est celle destinée à être raccordée à la première partie 1.

Selon cette disposition représentée sur l'ensemble des figures, la soupape 5 comprend une tête sur laquelle sont positionnés des moyens d'étanchéité 7 qui sont en contact par défaut avec la surface distale de la butée interne 11, préférentiellement au moyen du premier ressort 14 disposé au niveau de la tige de la soupape 5. La surface distale de la butée interne 11 est constituée par la surface faisant face à l'extrémité distale de la première partie 1. Le moyen d'étanchéité 7 exerce un appui axial orienté suivant l'axe longitudinal de la soupape 5 sur la butée interne 11.

Ainsi, lorsque la première partie 1 est reliée à l'unité extérieure 16, il n'y a pas de risque d'introduction de gaz ou d'humidité ou de perte de l'effet de vide réalisé au niveau de l'unité extérieure 16.

La deuxième partie 2 du connecteur selon l'invention comprend un deuxième corps longitudinal 4 ménageant un passage traversant permettant l'écoulement du fluide. Dans le passage traversant est placé un manchon mobile 9 et un piston 6. Le manchon 9 est avantageusement placé au moins partiellement dans le deuxième corps longitudinal 4 et reçoit le piston 6 en son intérieur.

Le piston 6 comporte de préférence une tête 24 par laquelle le piston 6 peut accoster la soupape 5 au niveau d'une extrémité distale de la tête 24. La tête 24 présente de préférence une partie inclinée, telle qu'une partie conique s'évasant vers l'extrémité distale du piston 6 et, vers l'avant, une portion au niveau de laquelle est présente une bordure pouvant former une butée de fin de course permettant de coopérer avec des dents tel que décrit plus loin. La bordure 25 peut être formée sous forme d'une section cylindrique de section accrue de la tête 24 en avant de la partie conique. La bordure 25 réalise avantageusement une discontinuité à la surface de la tête du piston 6.

Préférentiellement, le piston 6 est muni d'au moins un moyen d'étanchéité 8 assurant l'étanchéité par défaut avec le manchon 9. Préférentiellement, cette étanchéité est réalisée au niveau de l'extrémité proximale de la deuxième partie 2. Ce moyen d'étanchéité 8 est préférentiellement un joint torique agencé sur le piston 6. Ce moyen d'étanchéité 8 est plus précisément placé sur la tête conique du piston 6 de sorte à coopérer avec l'extrémité proximale du manchon 9. Le manchon 9 présente avantageusement au niveau de son extrémité proximale une surface biseautée vers l'intérieur du manchon destiné à coopérer avec la tête conique du piston 6. L'appui du moyen d'étanchéité 8 sur le manchon 9 est un appui mixte comprenant une composante axiale et une composante radiale.

Selon l'invention, le manchon 9 comprend au moins deux joints 10. Au moins un joint 10 est destiné à assurer l'étanchéité par défaut entre le deuxième corps longitudinal 4 et le manchon 9. Au moins un autre joint 10 est quant à lui destiné à assurer l'étanchéité avec le premier corps longitudinal 3 lorsque la première partie 1 et la deuxième partie 2 sont raccordées. Selon une possibilité préférée, les joints 10 sont des joints toriques.

Lorsque la première partie 1 et la deuxième partie 2 sont déconnectées, la deuxième partie 2 est hermétique et ne permet pas la sortie du gaz réfrigérant, par exemple en dehors d'une unité intérieure 17 de l'appareil de climatisation.

Selon un mode préféré de l'invention, le piston 6 et la butée interne 11 sont configurés pour ne pas entrer en contact. Le piston 6 est configuré pour coopérer avec la soupape 5. Selon le mode de réalisation représenté, le piston 6 présente un diamètre inférieur à celui du passage formé par la butée interne 11.

De même, le manchon 9 est configuré pour entrer en contact avec la butée interne 11.

Le piston 6 est monté fixe sur le deuxième corps longitudinal 4 préférentiellement au moyen d'une bague de maintien 13. La tige du piston 6 est montée fixe au niveau de la bague de maintien 13. La bague de maintien 13 est placée au niveau de l'extrémité distale de la deuxième partie 2.

Selon une possibilité, le positionnement du piston 6 peut être contrôlé en fonction du positionnement de la bague de maintien 13.

La bague de maintien 13 constitue une butée pour un second élément élastique tel qu'un ressort 15 destiné à être positionné entre la bague de maintien 13 et le manchon 9 de sorte à maintenir le manchon 9 partiellement en dehors du deuxième corps longitudinal 4.

Le connecteur selon l'invention comprend avantageusement un moyen de serrage 12 porté par l'une des première et deuxième parties 1, 2 coopérant avec un moyen complémentaire porté par l'autre de la première ou deuxième parties 1, 2. Le moyen de serrage 12 et son moyen complémentaire permettent, lors du raccordement de la première partie 1 et de la deuxième partie 2, de les rapprocher et de les maintenir en position. Selon une possibilité préférée, le rapprochement est progressif.

Préférentiellement, tel que représenté sur l'ensemble des figures, le moyen de serrage 12 et son moyen complémentaire sont constitués d'éléments mâle/femelle de filetage. Avantageusement, la première partie 1 présente une extrémité destinée à être en vis-à-vis de la deuxième partie 2 qui comprend un filetage extérieur 12a, ce filetage extérieur 12a illustrant le moyen complémentaire. La deuxième partie 2 comprend un moyen de serrage avantageusement sous la forme d'une bague de maintien 12 pouvant se visser sur le filetage extérieur 12a présent à l'extrémité de la première partie 1.

De manière générale, les raideurs de chaque ressort 14, 15 peuvent être comprises par exemple entre 7 et 22 N/mm avec une sélection de valeurs de raideurs de chaque ressort respectivement de la première et de la deuxième partie ou inversement à 7 et 11 N/mm et une sélection de valeurs de raideurs de chaque ressort respectivement de la première et de la deuxième partie ou inversement 18 et 22 N/mm.

Le rapport de l'écart des raideurs sur la somme des raideurs peut varier de 0 à 0,22. Ce rapport est avantageusement compris entre 0 et 0,1 afin que les deux ressorts 14 et 15 ne soient pas trop facilement actionnables quand le connecteur est démonté.

Il peut aussi être vu que, dans le cadre de la présente invention, ce n'est pas toujours les ressorts 14 ou 15 de la même partie 1, 2 du connecteur qui présentent les raideurs les plus élevées. Cela peut aussi bien être la première partie 1 que la deuxième partie 2.

Selon l'invention, les parties 1 et 2 peuvent être rapprochées l'une de l'autre pour placer le connecteur en position connectée mais un dispositif permet d'interdire un retrait de la deuxième partie 2 relativement à la première partie 1 une fois la position connectée atteinte.

Ce dispositif comprend, dans le mode de réalisation de figures, une partie inclinée 26 et bordure 25 dont un exemple a été précédemment présenté sous forme, respectivement, d'une partie conique et d'un relief au niveau de la tête 24 du piston 6. Il comprend en outre un élément coopérant sous forme, de préférence, d'une ou plusieurs dents servant à retenir le piston 6 en cas de tentative de retrait de la deuxième partie du connecteur.

Dans les figures, notamment aux figures 7 et 10, une pluralité de dents est formée sur un anneau qui peut par exemple être du type circlips ou anneau ouvert. Cet anneau comporte un corps annulaire fixable dans une gorge réalisée dans la paroi interne de la première partie 1 du connecteur. Il porte de préférence plusieurs dents réparties sur sa circonférence. Un exemple est donnée en figure 11. La ou les dents sont configurées pour intercepter la trajectoire de la bordure 25 ou de la partie inclinée 26 en cas de retrait du piston 6. Et la position relative de l'anneau 21 et de la bordure 25 est telle que la bordure 25 est située plus vers l'intérieur de la première partie 1 que l'anneau 21 lorsque le connecteur est en position connectée, tel qu'en figure 10. Pour y parvenir, depuis la position déconnectée, la tête 24 franchit les dents par déformation élastique de ces dernières.

De préférence, la portion conique a un diamètre minimal supérieur au diamètre de l'anneau 21 au niveau de l'extrémité distale des dents 22, et un diamètre maximal supérieur à ce même diamètre de l'anneau 21.

Les dents sont de préférence des lames flexibles de sorte qu'une sollicitation en flexion des dents est permise par la tête 24 du piston 6. Avantageusement, les dents sont inclinées de sorte que leurs extrémités libres avancent vers l'arrière de la première partie du connecteur pour favoriser le passage de la tête 24 du piston vers la position connectée.

Le procédé de montage des première et deuxième parties 1, 2 comprend par exemple les étapes suivantes.

Les moyens de filetage 12, 12a respectifs des première et deuxième parties 1, 2 sont mis en coopération et vissés progressivement, ce qui débute par exemple pour une longueur de filetage, restante et non en prise, égale à 12,4 mm ou 12,3 mm pour un filetage de longueur totale de 14 mm. Au-delà d'une certaine profondeur de vissage, le manchon 9 vient en contact avec la butée interne 11. La situation de la figure 7 est atteinte. Préférentiellement, le manchon 9 entre en contact par son extrémité proximale avec la surface proximale de la butée interne 11. A ce stade, bien que la première partie 1 et la deuxième partie 2 du connecteur soient raccordées, la profondeur de vissage du moyen de serrage 12 n'est pas suffisante et, de ce fait, la soupape 5 et le piston 6 sont toujours fermés par défaut. De plus, à cette étape, le manchon 9 est par au moins l'un de ses joints 10 apte à réaliser l'étanchéité avec la première partie 1.

Ainsi, le flux de fluide ne circule pas encore entre la première partie 1 et la deuxième partie 2 du connecteur. L'étanchéité entre la première partie 1 et la deuxième partie 2 est d'ores et déjà réalisée par le manchon 9.

La poursuite du vissage produit une avancée du piston 6 relativement au manchon 9 jusqu'à ce que le piston 6 vienne en appui sur la soupape 5. Le piston 6 génère un mouvement de recul de la soupape 5 en direction de l'extrémité distale de la première partie 1 supprimant ainsi l'étanchéité entre la soupape 5 et la butée interne 11. De même, ce mouvement éloigne le piston 6 et le manchon 9 et supprime l'étanchéité entre le piston 6 et le manchon 9. Cette étape est représentée en figures 9 et 10. Il y a donc circulation du fluide entre la première partie 1 et la deuxième partie 2 tout en ayant une étanchéité parfaite entre la première partie 1 et la deuxième partie 2 grâce au manchon 9 et à ses joints 10. Lors de cette étape, le manchon 9 et la soupape 5 ont un déplacement en sens opposé. Entre-temps, la tête du piston a dépassé l'anneau 21 et les dents de l'anneau 21 se retrouvent en regard de la partie conique de la tête 24. Une rétention est ainsi opérée, s'opposant aux mouvements du piston vers le sens de la déconnexion. La position de la figure 10 est atteinte.

La disposition de la présente invention permet lors du vissage du moyen de serrage 12 de maintenir constamment l'étanchéité entre la première partie 1 et la deuxième partie 2 du fait du déplacement simultané du manchon 9, élément constituant de la deuxième partie 2 et de la première partie 1. En effet, l'appui entre la butée interne 11 et le manchon 9 est constant et perpétuel lors du vissage du moyen de serrage 12 avec son moyen complémentaire 12a.

La figure 12 donne un exemple de montage d'un appareil de climatisation comportant le connecteur selon l'invention. Un appareil de climatisation selon l'invention comprend au moins une unité extérieure 16 destinée à être positionnée à l'extérieur du volume à climatiser. Généralement, l'unité extérieure 16 comporte des moyens de convexion forcée disposant d'un ventilateur ainsi qu'un circuit, dit circuit extérieur, dans lequel circule un fluide réfrigérant. En sortie et en entrée du circuit extérieur, des connecteurs sont généralement disposés de sorte à assurer la fermeture du circuit lors des phases de montage et de démontage.

L'appareil comprend, d'autre part, une unité intérieure 17, par exemple constituée d'un bloc mural apte à souffler de l'air à température sélectionnée dans le volume à climatiser. A cet effet, l'unité intérieure 17 comporte un circuit intérieur, pour la circulation du fluide réfrigérant. Les circuits intérieur et extérieur respectivement de l'unité intérieure 17 et de l'unité extérieure 16, en présentant chacun une entrée et une sortie de circuit, sont raccordés respectivement par un des tuyaux 18, 19 de raccordement illustrés également en figure 12.

A la figure 12, les extrémités des tuyaux de raccordement 18, 19 sont solidarisées avec la deuxième partie 2 d'un connecteur respectif selon l'invention. La première partie 1 du connecteur selon l'invention est alors montée respectivement sur l'unité extérieure 16 et l'unité intérieure 17. Ceci n'est pas forcément le cas dans tous les modes de réalisation de l'invention.

Dans une forme préférentielle d'appareil de climatisation, deux tuyaux de raccordement 18, 19 relient respectivement l'entrée du circuit extérieur de l'unité extérieure 16 à la sortie du circuit intérieur de l'unité intérieure 17 ou la sortie du circuit extérieur de l'unité extérieure 16 à l'entrée du circuit intérieur de l'unité intérieure 17, un connecteur étant prévu à chaque extrémité de chaque tuyau 18, 19.

Préférentiellement, chaque connecteur présente un de ses corps longitudinaux respectifs pour les première et deuxième parties 1, 2 comportant le ressort avec la raideur la moins élevée disposé du côté de l'unité intérieure 17 ou extérieure 16 tandis que l'autre corps longitudinal de la première ou deuxième partie 1, 2 comportant le ressort avec la raideur la plus élevée est disposé du côté du tuyau de raccordement 18, 19.

Le connecteur selon l'invention permet d'éviter toute manipulation du fluide réfrigérant sur des machines préchargées en fluide (le fluide est contenu dans le compresseur de l'unité extérieure 16) et évite une mise en service qui consiste en l'extraction du fluide, le tirage au vide et la réintroduction du fluide. On interdit par conséquent tout risque de dégazage ou de fuite lié à de mauvaises manipulations ou à un défaut de matériel.

En outre, une fois le connecteur activé, il n'est plus possible de le déconnecter si bien que l'on garantit qu'aucune manipulation ultérieure à l'installation n'est susceptible de produire des fuites de gaz.

### REFERENCES

- 1.: Première partie
- 2.: Deuxième partie
- 3.: Premier corps longitudinal
- 4.: Deuxième corps longitudinal
- 5.: Soupape
- 6.: Piston
- 7.: Moyen d'étanchéité de la soupape
- 8.: Moyen d'étanchéité du piston
- 9.: Manchon
- 10.: Joints
- 11.: Butée interne
- 12.: Moyen de serrage
- 12a.: Filetage
- 13.: Bague de maintien
- 14.: Premier ressort
- 15.: Second ressort
- 16.: Unité extérieure
- 17.: Unité intérieure
- 18.: Tuyau
- 19.: Tuyau
- 20.: Partie proximale
- 21.: Anneau
- 22.: Dent
- 23.: Gorge
- 24.: Tête de piston
- 25.: Bordure
- 26.: Partie inclinée

## Revendications

1. Connecteur de tuyau de circuit de climatisation comprenant une première partie (1) et une deuxième partie (2) destinées à coopérer de sorte que le connecteur opère un passage d'une position déconnectée à une position connectée, la première partie (1) comprenant un premier corps longitudinal (3) ménageant un passage traversant recevant une soupape (5) mobile, ledit passage logeant un premier ressort (14) destiné à maintenir la soupape (5) en contact étanche avec le premier corps longitudinal (3) lorsque le connecteur est en position déconnectée, le premier corps longitudinal (3) comprenant une butée interne (11) contre laquelle la soupape (5) est destinée à être en contact par défaut sous l'action du premier ressort (14) au moins lorsque le connecteur est en position déconnectée et la deuxième partie (2) comprenant un deuxième corps longitudinal (4) ménageant un passage traversant ainsi qu'un manchon (9) mobile et un piston (6), le piston (6) étant placé au moins partiellement dans le manchon (9) placé au moins partiellement dans le deuxième corps longitudinal (4) et le piston (6) étant fixe relativement au deuxième corps longitudinal (4), un second ressort (15) étant placé entre une bague de maintien (13) et le manchon (9) dans le deuxième corps longitudinal (4) de sorte à maintenir un contact du manchon (9) contre le premier corps longitudinal (3) lorsque le connecteur est en position connectée, ledit connecteur comporte un dispositif anti-retour configuré pour retenir le piston (6) dans la première partie (1) après le passage de la position déconnectée à la position connectée, **caractérisé en ce que** le dispositif anti-retour comprend au moins une dent (22) de rétention, fixe relativement au premier corps longitudinal (3) et configurée pour s'appliquer sur une surface de butée portée par le piston (6).

2. Connecteur selon la revendication précédente, dans lequel la au moins une dent (22) est déformable élastiquement de sorte à autoriser le passage de la dent (22) sur la surface de butée lors du passage de la position déconnectée à la position connectée.

3. Connecteur selon la revendication précédente, dans lequel la au moins une dent (22) est inclinée en direction d'une partie distale du premier corps longitudinal (3).

4. Connecteur selon l'une quelconque des revendications précédentes dans lequel la au moins une dent (22) est portée par un anneau (21) fixée dans le premier corps longitudinal.

5. Connecteur selon la revendication précédente, dans lequel l'anneau (21) est monté dans une gorge (23).

6. Connecteur selon l'une des deux revendications précédentes, comprenant une pluralité de dents (22) suivant la circonférence de l'anneau (21).

7. Connecteur selon l'une des revendications précédentes, dans lequel le piston (6) comporte une tête (24), la surface de butée étant portée par la tête (24).

8. Connecteur selon la revendication précédente, dans lequel la surface de butée comporte une partie inclinée (26).

9. Connecteur selon la revendication précédente dans lequel la partie inclinée (26) comprend une portion conique et comportant une pluralité de dents uniformément réparties autour de la portion conique.

10. Connecteur selon l'une des deux revendications précédentes, dans lequel la surface de butée comprend une bordure (25) étant située entre une extrémité distale de la tête (24) et la partie inclinée (26).

11. Connecteur selon l'une quelconque des revendications précédentes dans lequel l'extrémité distale (26) de la tête du piston (6) est configurée pour être en contact avec la soupape (5) lorsque le connecteur est en position connectée.

12. Appareil de climatisation comportant une unité extérieure (16) et au moins une unité intérieure (17), au moins l'une des unités extérieure (16) et intérieure (17) comprenant un circuit empli d'un fluide réfrigérant, les deux circuits étant reliés par au moins un connecteur selon l'une quelconque des revendications précédentes.

## Patentansprüche

1. Rohrverbinder für einen Klimakreislauf, umfassend einen ersten Teil (1) und einen zweiten Teil (2), die dazu vorgesehen sind, derart zusammenzuwirken, dass der Verbinder eine Passage von einer unverbundenen Stellung zu einer verbundenen Stellung bewirkt, wobei der erste Teil (1) einen ersten länglichen Körper (3) umfasst, der eine Durchgangspassage herstellt, welche ein bewegliches Ventil (5) aufnimmt, wobei die Passage eine erste Feder (14) beherbergt, die dazu vorgesehen ist, das Ventil (5) in dichtem Kontakt mit dem ersten länglichen Körper (3) zu halten, wenn sich der Verbinder in unverbundener Stellung befindet, wobei der erste längliche Körper (3) einen Innenanschlag (11) umfasst, gegen den das Ventil (5) vorgesehen ist, sich standardmäßig unter der Einwirkung der ersten Feder (14), mindestens wenn sich der Verbinder in unverbundener Stellung befindet, in Kontakt zu befinden, und der zweite Teil (2) einen zweiten länglichen Körper (4), der eine Durchgangspassage herstellt, sowie eine bewegliche Muffe (9) und einen Kolben (6) umfasst, wobei der Kolben (6) mindestens teilweise in der Muffe (9) platziert ist, welche mindestens teilweise im zweiten länglichen Körper (4) platziert ist, und wobei der Kolben (6) in Bezug auf den zweiten länglichen Körper (4) fest ist, wobei eine zweite Feder (15) derart zwischen einem Haltering (13) und der Muffe (9) im zweiten länglichen Körper (4) platziert ist, dass sie einen Kontakt der Muffe (9) gegen den ersten länglichen Körper (3) hält, wenn sich der Verbinder in verbundener Stellung befindet, der Verbinder eine Rückkehr-Sperrvorrichtung umfasst, die dafür ausgebildet ist, den Kolben (6) nach der Passage von der unverbundenen Stellung zur verbundenen Stellung im ersten Teil (1) zurückzuhalten, **dadurch gekennzeichnet, dass** die Rückkehr-Sperrvorrichtung mindestens einen Rückhaltezahn (22) umfasst, der in Bezug auf den ersten länglichen Körper (3) fest und dafür ausgebildet ist, sich an eine Anschlagfläche anzulegen, welche der Kolben (6) trägt.

2. Verbinder nach dem vorstehenden Anspruch, wobei der mindestens eine Zahn (22) derart elastisch verformbar ist, dass bei der Passage von der unverbundenen Stellung zur verbundenen Stellung die Passage des Zahns (22) auf die Anschlagfläche ermöglicht wird.

3. Verbinder nach dem vorstehenden Anspruch, wobei der mindestens eine Zahn (22) in Richtung eines distalen Teils des ersten länglichen Körpers (3) geneigt ist.

4. Verbinder nach einem der vorstehenden Ansprüche, wobei der mindestens eine Zahn (22) von einem Ring (21) getragen wird, der im ersten länglichen Körper befestigt ist.

5. Verbinder nach dem vorstehenden Anspruch, wobei der Ring (21) in einer Kehle (23) montiert ist.

6. Verbinder nach einem der zwei vorstehenden Ansprüche, der dem Umfang des Ringes (21) folgend eine Vielzahl von Zähnen (22) umfasst.

7. Verbinder nach einem der vorstehenden Ansprüche, wobei der Kolben (6) einen Kopf (24) umfasst, wobei der Kopf (24) die Anschlagfläche trägt.

8. Verbinder nach dem vorstehenden Anspruch, wobei die Anschlagfläche einen geneigten Teil (26) umfasst.

9. Verbinder nach dem vorstehenden Anspruch, wobei der geneigte Teil (26) einen konischen Abschnitt umfasst, und eine Vielzahl von gleichmäßig um den konischen Abschnitt herum verteilten Zähnen umfassend.

10. Verbinder nach einem der zwei vorstehenden Ansprüche, wobei die Anschlagfläche eine Umrandung (25) umfasst, die zwischen einem distalen Ende des Kopfes (24) und dem geneigten Teil (26) liegt.

11. Verbinder nach einem der vorstehenden Ansprüche, wobei das distale Ende (26) des Kopfes des Kolbens (6) dafür ausgebildet ist, sich mit dem Ventil (5) in Kontakt zu befinden, wenn sich der Verbinder in verbundener Stellung befindet.

12. Klimagerät, das eine Außeneinheit (16) und mindestens eine Inneneinheit (17) umfasst, wobei mindestens eine aus der Außen- (16) und Inneneinheit (17) einen Kreislauf umfasst, der mit einem Kühlfluid gefüllt ist, wobei die zwei Kreisläufe über mindestens einen Verbinder nach einem der vorstehenden Ansprüche zusammengeschlossen sind.

## Claims

1. Air-conditioning circuit pipe connector comprising a first part (1) and a second part (2) intended to engage such that the connectors switches from a disconnected position to a connected position, the first part (1) comprising a first longitudinal body (3) providing a through passage receiving a movable valve (5), said passage accommodating a first spring (14) intended to keep the valve (5) in tight contact with the first longitudinal body (3) when the connector is in the disconnected position, the first longitudinal body (3) comprising an internal abutment (11) against which the valve (5) is intended to be in contact by default under the action of the first spring (14) at least when the connector is in the disconnected position and the second part (2) comprising a second longitudinal body (4) providing a through passage as well as a movable sleeve (9) and a piston (6), the piston (6) being placed at least partially in the sleeve (9) placed at least partially in the second longitudinal body (4) and the piston (6) being fixed relative to the second longitudinal body (4), a second spring (15) being placed between a securing ring (13) and the sleeve (9) in the second longitudinal body (4) so as to maintain contact of the sleeve (9) against the first longitudinal body (3) when the connector is in the connected position, said connector includes a non-return device configured to hold the piston (6) in the first part (1) after the switch from the disconnected position to the connected position, **characterised in that** the non-return device comprises at least one retaining tooth (22), fixed relative to the first longitudinal body (3) and configured to bear down on an abutment surface borne by the piston (6).

2. Connector according to the preceding claim, wherein the at least one tooth (22) is elastically deformable so as to allow the tooth (22) to pass onto the abutment surface when switching from the disconnected position to the connected position.

3. Connector according to the preceding claim, wherein the at least one tooth (22) is inclined towards a distal part of the first longitudinal body (3).

4. Connector according to any one of the preceding claims wherein the at least one tooth (22) is borne by a ring (21) fixed in the first longitudinal body.

5. Connector according to the preceding claim, wherein the ring (21) is mounted in a groove (23).

6. Connector according to one of the two preceding claims, comprising a plurality of teeth (22) following the circumference of the ring (21).

7. Connector according to one of the preceding claims, wherein the piston (6) includes a head (24), the abutment surface being borne by the head (24).

8. Connector according to the preceding claim, wherein the abutment surface includes an inclined part (26).

9. Connector according to the preceding claim wherein the inclined part (26) comprises a conical portion and including a plurality of teeth uniformly distributed about the conical portion.

10. Connector according to one of the two preceding claims, wherein the abutment surface comprises an edge (25) situated between a distal end of the head (24) and the inclined part (26).

11. Connector according to any one of the preceding claims wherein the distal end (26) of the head of the piston (6) is configured to be in contact with the valve (5) when the connector is in the connected position.

12. Air-conditioning appliance including an external unit (16) and at least one internal unit (17), at least one of the external (16) and internal (17) units comprising a circuit filled with a refrigerant fluid, the two circuits being connected by at least one connector according to any one of the preceding claims.
